# EUROPEAN PATENT SPECIFICATION

(11) **EP 0 988 344 B1**
(45) Date of publication and mention of the grant of the patent: **16.01.2002**
(21) Application number: 97925067.7
(22) Date of filing: 09.06.1997
(51) Int. Cl.: C09B 67/22, C09B 63/00

(54) **COLORANT BLENDS CONTAINING A SALT-FORMING AZO PIGMENT AND A 1,4-DIKETO-3, 6-DIARYLPYRROLO(3,4-C)PYROLLE**
FARBSTOFFMISCHUNGEN ENTHALTEND EIN SALZBILDENDES AZOPIGMENT UND EIN 1,4-DIKETO-3,6-DIARYLPYRROLO(3,4-C)PYRROL
MELANGES COLORANTS CONTENANT UN PIGMENT AZOIQUE FORMANT SEL ET UN 1,4-DICETO-3, 6-DIARYLPYRROLO(3,4-C)PYRROLE

(43) Date of publication of application: 29.03.2000
(73) Proprietor: Ciba Spezialitätenchemie Holding AG (Ciba Spécialités Chimiques Holding SA) (Ciba Specialty Chemicals Holding Inc.), 4057 Basel (CH)
(72) Inventor: JAFFE, Edward, Ephraim, Wilmington, DE 19803 (US); DELANEY, James, Martin, Wilmington, DE 19808 (US)
(86) International application number: EP9702991
(87) International publication number: WO9856859

(56) References cited:
- EP-A- 0 224 445
- EP-A- 0 243 304
- EP-A- 0 277 914
- EP-A- 0 535 774
- US-A- 2 508 448
- DATABASE WPI Section Ch, Week 8413 Derwent Publications Ltd., London, GB; Class E21, AN 84-078792 XP002054561 & JP 59 030 862 A (TOYO INK MFG CO) , 18 February 1984

## Description

The present invention relates to colorant blends comprising (a) an azo component, which is a salt of a salt-forming azo pigment of the formula

A - N = N - B,

wherein A is the residue of a diazo component and B is the residue of a coupling component; and (b) a second component, which is an opaque 1,4-diketo-3,6-diarylpyrrolo[3,4-c]pyrrole (DPP) pigment.

Pigments that are suitable for use as the azo component are well-known in the pigment art and are described, for example, in the Colour Index, *International,* Third Edition (1971), including the Fourth Revision (1992), which is published by the Society of Dyers and Colorists.

In particular, suitable azo components are salts of the pigments typically prepared by a reaction sequence of diazotization and coupling wherein a diazotizable aromatic amine, which is referred to as the diazo component, is combined with a coupling component, which is typically an activated aromatic compound or a compound containing an activated methylene group. The diazo coupling reaction is well-known to the organic chemist and is described in Willy Herbst et al, Industrial Organic Pigments, VCH (1994) pages 189-343, along with suitable diazo and coupling components and important pigments suitable for use as the azo component of the present colorant blends.

The diazo component is preferably a diazotizable aromatic amine sulfonic or carboxylic acid, for example, an amino-substituted benzene, toluene or naphthalene which is also substituted by a water-solubilizing group, a sulfonic acid group, a carboxylic acid group, or a salt form thereof.

In general, the water-solubilizing substituent is any group capable of forming a water-soluble salt. In particular, the water-solubilizing substituent is an acidic substituent, such as the carboxylic acid or sulfonic acid group mentioned above, or a salt form thereof, in particular, a water-solubilizing salt form, especially an alkali metal salt, such as a sodium or potassium salt.

In general, suitable coupling components are activated aromatic compounds or compounds that contain an activated methylene group which compounds are capable of coupling with the diazotized aromatic amine, especially
(a) 2-hydroxynaphthalene compounds of the formula 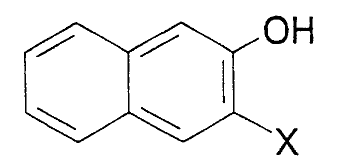 wherein X is H, -COOH, -SO₃H, an amide residue of the formula 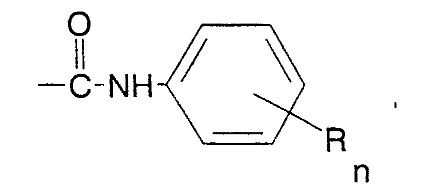 or a sulfonamide residue of the formula 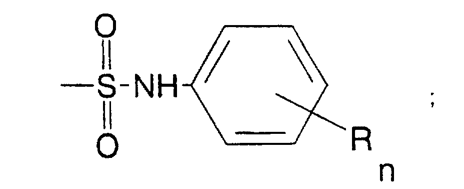 wherein R is alkyl, for example methyl or ethyl; alkoxy, for example methoxy or ethoxy; halogen, especially chlorine; nitro; or a 5- or 6- membered heterocycle condensed to the phenyl ring; and wherein n is 0 to 3; and
(b) various pyrazolone derivatives having activated methylene groups, especially 1-phenyl-3-methyl-5-pyrazolone, 1-phenyl-3-carbethoxy-5-pyrazolone or one of their derivatives.

The coupling component may also contain a water-solubilizing substituent.

Preferred coupling components are those described under (a).

Both the diazo and coupling components are unsubstituted or substituted by one or more customary substituents, for example, halogen, especially chlorine; hydroxy and ether derivatives thereof; nitro; alkyl, especially C₁-C₄alkyl, for example, methyl and ethyl; alkoxy, especially C₁-C₄alkoxy, for example, methoxy and ethoxy; -COOH and salts and esters thereof; -SO₃H and salts and esters thereof, carboxamides or sulfonamides, especially N-aryl-substituted carboxamides or sulfonamides, for example N-phenyl-substituted carboxamides or sulfonamides; which customary substituents are unsubstituted or further substituted, especially in the alkyl, alkoxy or aryl groups, by additional customary substituents, for example, trifluoromethyl, which is considered to be a methyl substituent which is further substituted by three fluorines, or 2,4-dichlorophenyl, which is considered to be a phenyl substituent which is further substituted by two chlorines.

Suitable diazo components include 2-amino-4-chloro-5-methylbenzenesulfonic acid, 2-aminonaphthalene-1-sulfonic acid, 2-amino-4-methyl-5-chlorobenzenesulfonic acid, 2-amino-5-methylbenzenesulfonic acid, 2-amino-4-methylbenzenesulfonic acid, 2-methyl-4-aminobenzenesulfonic acid, 2-chloro-5-aminobenzenesulfonic acid, 4-aminobenzenesulfonic acid and 2-amino-4-ethyl-5-chlorobenzenesulfonic acid.

Suitable coupling components include 2-naphthol, 3-hydroxy-2-naphthoic acid, 2-hydroxy-3-naphthanilide, including 2-hydroxy-3-naphth-2'-methylanilide, 2-hydroxy-3-naphth-2'-methoxyanilide, 2-hydroxy-3-naphth-2'-ethoxyanilide, 2-hydroxy-3-naphth-3'-nitroanilide, 2-hydroxy-3-naphth-4'-chloroanilide, 2-hydroxy-3-naphth-4'-methoxyanilide, 2-hydroxy-3-naphth-4'-ethoxyanilide, 2-hydroxy-3-naphth-2',4'-dimethylanilide, 2-hydroxy-3-naphth-2'-methyl-5'-chloroanilide, 2-hydroxy-3-naphth-2'-methoxy-5'-chloroanilide, 2-hydroxy-3-naphth-2',5'-dimethoxyanilide, 2-hydroxy-3-naphth-2',4'-dimethoxy-5'-chloroanilide, 2-hydroxy-3-naphth-2',5'-dimethoxy-4'-chloroanilide, and the corresponding 2-hydroxy-3-naphthsulfonanilides.

Suitable salts of the salt-forming azo components include all metal and ammonium salts. Especially suitable metal salts include alkali metal salts, alkaline earth metal salts, and transition metal salts, such as Mn. The calcium, barium, and strontium salts of the azo components are especially suitable salts. In general, the salt is chosen such that the azo component is insoluble in the medium that it will be incorporated into.

In particular, azo pigments suitable as the azo component of the present colorant blends include those classified as azo pigment lakes by those skilled in the art, in particular red or orange azo pigment lakes. Specific pigments that are useful as the azo component include the C.I. Pigment Reds and the C.I. Pigment Oranges, including P.R.48, P.R.48:1, P.R.48:2, P.R.48:3, P.R.48:4, P.R.48:5, P.R.49, P.R.49:1, P.R.49:2, P.R.49:3, P.R.50:1, P.R.51, P.R.52:1, P.R.52:2, P.R.53, P.R.53:1, P.R.53:3, P.R.57:1, P.R.58:2, P.R.58:4, P.R.60:1, P.R.63:1. P.R.63:2, P.R.64, P.R.64:1, P.R.66, P.R.67, P.R.68, P.R.151, P.R.200, P.R.237, P.R.239, P.R.240, P.R.243, P.R.247, P.R.247:1; P.O.17, P.O.17:1, P.O.19 and P.O.46; wherein the number indicates the Colour Index designation by which the azo component is commonly known.

Particularly useful azo components include salts of the pigments prepared by the diazo coupling of (A) 2-amino-4-chloro-5-methylbenzenesulfonic acid with 3-hydroxy-2-naphthoic acid (C.I. Pigment Red48), (B) 2-aminonaphthalene-1-sulfonic acid with 2-naphthol (C.I. Pigment Red49), (C) 2-amino-4-methyl-5-chlorobenzenesulfonic acid with 3-hydroxy-2-naphthoic acid (C.I. Pigment Red52), (D) 2-amino-4-methyl-5-chlorobenzenesulfonic acid with 2-naphthol (C.I. Pigment Red53), (E) 2-amino-5-methylbenzenesulfonic acid with 3-hydroxy-2-naphthoic acid (C.I. Pigment Red57), (F) 2-amino-4-ethyl-5-chlorobenzenesulfonic acid with 2-naphthol (C.I. Pigment Orange46). Especially the barium, calcium, manganese, magnesium and strontium salts of these azo compounds.

Particularly useful colorant blends are those wherein the azo component is a red or orange azo pigment lake and the second component is an opaque DPP pigment, including mixtures and solid solutions containing a DPP pigment. If it is desired to maintain the color of the pigment blend upon exposure to light and/or weather, the azo component should have nearly the same hue as the second component.

DPP pigments useful as the second component are well-known in the pigments art and are described, for example, in United States Patent Nos.4,579,949 and 4,415,685, which are here incorporated by reference. DPP pigments are also known in the pigments art as 3,6-diaryl-1,4-diketopyrrolo[3,4-c]pyrrole pigments and have been described in the chemical literature as 3,6-diaryl-1,4-diketo-2,5-dihydro-pyrrolo[3,4-c]pyrrole compounds. Preferred DPP components include diphenyl-DPP, di(4-chlorophenyl)-DPP, di(4-tertbutylphenyl)-DPP, di(3-cyanophenyl)-DPP, di(4-cyanophenyl)-DPP, di(biphenyl-4-yl)-DPP and di(4-methyl-phenyl)-DPP, di(3,4-dichlorophenyl)-DPP.

Opaque solid solution pigments containing a DPP component are also useful as the second component of the present colorant blends. Such solid solution pigments are known in the art and are disclosed, for example, in U.S. Patent Nos.4,810,304 and 4,783,540, and in U.S. Patent Application Serial Nos. 08/122,025, 08/289,167, 08/314,018, and 08/312,493, which are here incorporated by reference.

According to the present invention, the azo component and second component are combined in any proportions. In general, the weight ratio of the azo component to the second component is from 5:95 to 60:40 in the colorant blends, in particular from 10:90 to 50:50, more specifically from 10:90 to 25:75.

Specific colorant blends that are particularly useful include those colorant blends having an azo component/second component ratio of from 10:90 to 50:50 with the following combinations of azo component/second component: P.R.53:1/unsubstituted DPP; P.R.53:3unsubstituted DPP; P.R.53:1/di(4-chlorophenyl)-DPP; P.R.48:5/di(4-chlorophenyl)-DPP; P.R.48:1/unsubstituted DPP; P.R.48:4/di(biphenyl-4-yl)-DPP; P.R.48:2/di(biphenyl-4-yl)-DPP; P.R.48:3/unsubstituted DPP; P.R.48:5/unsubstituted DPP; P.R.49:1/di(4-chlorophenyl)-DPP; P.R.49:1/di(biphenyl-4-yl)-DPP; P.R.49:2/di(biphenyl-4-yl)-DPP; P.R.49:2/di(4-chlorophenyl)-DPP; P.R.57:1/di(biphenyl-4-yl)-DPP.

The colorant blends of the present invention are characterized by greater than additive lightfastness and weatherfastness than would be expected based on the known properties of the individual components. Thus, ΔE_{blend} is less thanΔE_{calc} for the present colorant blends; wherein ΔE_{blend} is the observed ΔE value of the colorant blend, andΔE_{calc} is the color difference calculated according to the formula: ΔE_{calc}= (ΔE_{azo})(X_{azo})+(ΔE_{sec})(X_{sec}), wherein (ΔE_{azo}) and (ΔE_{sec}) are the observed ΔE values for the azo component and the second component, respectively, and (X_{azo}) and (X_{sec}) are the weight fraction of the azo component and second component, respectively, in the colorant blend.

The hue of the azo component and the second components are preferably as close as possible. In particular, the hue of the second component is preferably within ±5units of the hue of the azo component on the CIE Lch scale. Preferably, the hue of the azo component is within ±3units of the second component, most preferably within ±2 units. Such blends show excellent lightfastness and weatherfastness properties.

The CIE Lch system is well-known in the arts relating to colorants, for example the dye and pigments industries. According to the CIE Lch system, every shade is broken down into three measurable components: the L component, which is a measure of lightness, the c component, which is a measure of chroma and the h component which is a measure of hue. Instrumentation for measuring the Lch values is well-known and is commercially available.

Thus, the present invention also relates to a method of selecting pigments to be blended in a colorant blend consisting of an azo component and a second component, which comprises selecting a second component having a hue within 5units on the CIE Lch scale of the hue of the azo component.

The present invention further relates to a method of preparing a colorant blend which comprises blending an azo component and a second component, wherein the second component has a hue within ±5units on the CIE Lch scale of the hue of the azo component. Preferably the hues are within ±3units, most preferably within ±2 units.

Although this invention generally relates to colorant blends wherein the azo and second components have hues within ±5units, certain colorant blends with components having a higher hue difference, for example ±8 or ±10 units, also have excellent fastness properties wherein ΔE_{blend} is less than 3. For example, colorant blends consisting essentially of Pigment Red52:2 and di(4-chlorophenyl)-DPP possess excellent fastness properties.

The colorant blends are prepared by methods known in the art for preparing blends of pigment colorants, for example, by simple dry blending and wet blending techniques, preferably by a dry blending technique. For example, the azo component and the second component are blended together by known dry or wet blending techniques and then dispersed, or, the azo component and the second component are dispersed separately and then the dispersions are blended together into a single dispersion.

The present invention also relates to a method of coloring a high-molecular-weight organic material with a colorant blend described above. Generally, an effective pigmenting amount of the colorant blend is incorporated into the high-molecular-weight organic material to be pigmented, in particular by ball-milling, attritor and other dispersion-milling techniques. An effective pigmenting amount is any amount suitable to provide the desired color in the high-molecular-weight organic material. In particular, the colorant blends are used in an amount of 0.01 to 50% by weight, preferably 1 to 25% by weight, based on the weight of the high-molecular-weight organic material to be pigmented.

The pigmented, high-molecular-weight organic materials which are colored according to the present process are useful in a variety of applications. For example, the high-molecular-weight organic material can be used for the pigmentation of inks, lacquers and enamel coating compositions. The pigmented high-molecular-weight organic materials prepared according to the present invention are particularly useful for preparing automotive coating paints.

The high-molecular-weight organic materials which are colored according to the present process are, for example, cellulose ethers, cellulose esters, polyurethanes, polyesters, polyolefins, polystyrene, polyethers, polyvinyl halides, polytetrafluoroethylene, acrylic and methacrylic polymers, rubber, silicone polymers, phenol/formaldehyde resins, melamine, formaldehyde resins, urea/formaldehyde resins, epoxy resins and diene rubbers or copolymers thereof.

High-molecular-weight organic materials which are useful for heat-curable coatings or crosslinking, chemically-reactive coatings, are also colored according to the present process. Examples of the pigmented, high-molecular-weight organic materials which are used in coatings include acrylic, alkyd, epoxy, phenolic, melamine, urea, polyester, polyurethane, blocked isocyanate, triglycidyl isocyanurate, glycolurils, polyfunctional β-hydroxyalkylamides, benzoguanamine or cellulose ester resins, or combinations thereof. The pigmented, high-molecular-weight organic materials prepared according to the present process are also useful as air-drying or physically-drying coatings, for example, conventional lacquers such as those used in the cosmetics industry as nail varnishes, for example nitrocellulose lacquers.

The present process is particularly suitable for preparing coatings, for example, industrial coatings and those conventionally employed in the automobile industry, especially in thermosetting systems, such as acrylic/melamine resin, alkyd/melamine resin or thermoplastic acrylic resin systems. The inventive colorant blends are especially suitable for coloring solvent-borne automotive finishes.

The colorant blends are especially suitable for pigmenting the high-molecular-weight organic materials in solid colors, such as masstone colors. However, the colorant blends are also used in effect pigments, such as coated and uncoated micas.

Depending on the end use, it can be advantageous to add specific amounts of texture improving agents to the pigment. Suitable texture improving agents are, in particular, fatty acids of not less than 18 carbon atoms, for example stearic or behenic acid or the amides or metal salts thereof, preferably calcium or magnesium salts, as well as plasticizers, waxes, resin acids such as abietic acid or metal salts thereof, colophonium, alkyl phenols or aliphatic alcohols such as stearyl alcohol or vicinal diols such as dodecane-1,2-diol, and also modified colophonium/- maleate resins or fumaric acid/colophonium resins or polymeric dispersants. The texture improving agents are preferably added in amount of 0.1 to 30%, by weight, most preferably 2 to 15% by weight, based on the final product.

Generally, the inventive colorant blends are suitable for all pigment applications and are distinguished by excellent color strength and opacity, good fastness to light, weathering and heat, excellent purity and saturation, as well as by good dispersability when incorporated into plastics or coatings.

The following examples further illustrate the preferred embodiments of this invention. In these examples, all parts given are by weight unless otherwise noted. All color designations are based on the CIE Lch system.

Example 1: 50 parts of commercially available Pigment Red48:3 (IRGALITE RED 2BSP from CIBA-GEIGY), having a hue component of 30.8, and 50 parts of commercially available di(4-chlorophenyl)-DPP (IRGAZIN RED DPPBO from CIBA-GEIGY), having a hue component of 29.6, the hues being reported in the CIE Lch system, are dry blended in a V-blender to yield a uniform 50:50 blend having a red color with a hue component of 29.7.

Example 2: A masstone panel is prepared from an acrylic-melamine coating based on the following millbase formula:

| | |
|---|---|
| colorant blend from Example 1 | 98 parts |
| acrylic resin | 98 parts (69 parts non-volatile) |
| dispersant | 53.6 parts (29.5 parts non-volatile) |
| solvent | 100 parts |

The pigmented millbase is dispersed in a temperature-controlled attritor mill for three hours using steel media to yield a millbase dispersion.

A masstone paint is prepared by combining 36.5 parts of the millbase dispersion, 35 parts of acrylic resin, 42 parts alkylated melamine-formaldehyde resin, and 25 parts of a catalyst solution containing dodecylbenzenesulfonic acid as catalyst, N-propylamine and a U.V stabilizer. The masstone paint is then sprayed onto primed aluminum panels and baked for 30 minutes at 250°F. The panels are then exposed to simulated outdoor conditions using a Xenon Arc Cl-65 Weather-O-Meter and a schedule similar to ASTMG26-70. Since the ΔE observed for Pigment Red48:3 alone after 2000 hours exposure is 11.5, and the ΔE observed for di(4-chlorophenyl)-DPP alone after 2000 hours exposure is 0.8, the observed ΔE of 1.0 after 2000 hours exposure for the colorant blend of the present invention is much less than would be expected based on the observed ΔE values of the individual components.

Example 3: The procedure of Example 2 is followed with a 35:65 colorant blend containing 35 parts of Pigment Red48:3 and 65 parts di(4-chlorophenyl)-DPP. After 2000 hours exposure, a ΔE of 0.4 is observed.

Example 4: The procedure of Example 2 is followed with a 25:75 colorant blend containing 25 parts of Pigment Red48:3 and 75 parts di(4-chlorophenyl)-DPP. After 2000 hours of exposure a ΔE of 0.8 is observed.

Example 5: The procedure of Example 2 is followed with a 10:90 colorant blend which contains 10 parts of Pigment Red48:3 and 90 parts di(4-chlorophenyl)-DPP. After 2000 hours exposure a ΔE of 1.1 is observed.

Example 6: The procedure of Examples 2, 4 and 5 are followed with colorant blends wherein the Pigment Red48:3 is replaced with Pigment Red48:2. After 2000 hours exposure, a ΔE of 1.8, 1.6 and 1.4 is observed with the 50:50 blend, the 25:75 blend and the 10:90 blend, respectively.

Example 7: The procedure of Examples 2, 4 and 5 are followed with colorant blends wherein the Pigment Red48:3 is replaced with Pigment Red48:2 and the di(4-chlorophenyl)-DPP is replaced by di(biphenyl-4-yl)-DPP. After 2000 hours exposure, a ΔE of 1.2, 1.1 and 1.4 is observed for the masstone panels 50:50 blend, the 25:75 blend and the 10:90 blend, respectively.

Example 8: The procedure of Examples 2, 4 and 5 are followed with colorant blends wherein the Pigment Red48:3 is replaced with Pigment Red52:2 and the di(4-chlorophenyl)-DPP is replaced by di(biphenyl-4-yl)-DPP. After 2000 hours exposure, a ΔE of 0.9, 0.7 and 0.6 is observed for the 50:50 blend, the 25:75 blend and the 10:90 blend, respectively.

Example 9: The procedure of Examples 2 and 4 are followed with colorant blends wherein the Pigment Red48:3 is replaced with Pigment Red49:2 and the di(4-chlorophenyl)-DPP is replaced by di(biphenyl-4-yl)-DPP. After 2000 hours exposure, a ΔE of 0.3 and 0.4 is observed for the 50:50 blend and the 25:75 blend, respectively.

Example 10: The procedure of Example 4 is followed with a colorant blend wherein the Pigment Red48:3 is replaced with Pigment Red57:1 and the di(4-chlorophenyl)-DPP is replaced by di(biphenyl-4-yl)-DPP. After 2000 hours exposure, a ΔE of 0.7 is observed for the 25:75 blend.

Example 11: The procedure of Examples 2, 4 and 5 are followed with colorant blends wherein the Pigment Red48:3 is replaced with Pigment Red53:1 and the di(4-chlorophenyl)-DPP is replaced by unsubstituted DPP. After 2000 hours exposure, a ΔE of 1.7, 0.9 and 0.4 is observed for the 50:50 blend, the 25:75 blend and the 10:90 blend, respectively.

Example 12: The procedure of Examples 2, 4 and 5 are followed with colorant blends wherein the Pigment Red48:3 is replaced with the Sr salt of Pigment Red53 and the di(4-chlorophenyl)-DPP is replaced by unsubstituted DPP. After 2000 hours exposure, a ΔE of 1.6, 1.0 and 0.5 is observed for the 50:50 blend, the 25:75 blend and the 10:90 blend, respectively.

Example 13: The procedure of Examples 2, 4 and 5 are followed with colorant blends wherein the Pigment Red48:3 is replaced with Pigment Red49:1. After 2000 hours exposure, a ΔE of 1.4, 1.4 and 1.9 is observed for the 50:50 blend, the 25:75 blend and the 10:90 blend, respectively.

Example 14: The procedure of Examples 2, 4 and 5 are followed with colorant blends wherein the Pigment Red48:3 is replaced with Pigment Red48:1. After 2000 hours exposure, a ΔE of 1.6, 0.4 and 0.8 is observed for the 50:50 blend, the 25:75 blend and the 10:90 blend, respectively.

Example 15: The procedure of Examples 2, 4 and 5 are followed with colorant blends wherein the Pigment Red48:3 is replaced with Pigment Red48:5 (Mg salt). Colorant blends with very good lightfastness and weatherfastness are obtained.

Example 16: The procedure of Examples 2, 4 and 5 are followed with colorant blends wherein the Pigment Red48:3 is replaced with Pigment Red53:1. Colorant blends with very good lightfastness and weatherfastness are obtained.

Example 17: The procedure of Examples 2, 4 and 5 are followed with colorant blends wherein the Pigment Red48:3 is replaced with Pigment Red48:1 and the di(4-chlorophenyl)-DPP is replaced by unsubstituted DPP. Colorant blends with very good lightfastness and weatherfastness are obtained.

Example 18: The procedure of Examples 2, 4 and 5 are followed with colorant blends wherein the di(4-chlorophenyl)-DPP is replaced by unsubstituted DPP. Colorant blends with very good lightfastness and weatherfastness are obtained.

Example 19: The procedure of Examples 2, 4 and 5 are followed with colorant blends wherein the Pigment Red48:3 is replaced with Pigment Red48:5 and the di(4-chlorophenyl)-DPP is replaced by unsubstituted DPP. Colorant blends with very good lightfastness and weatherfastness are obtained.

Example 20: The procedure of Examples 2, 4 and 5 are followed with colorant blends wherein the Pigment Red48:3 is replaced with Pigment Orange19 and the di(4-chlorophenyl)-DPP is replaced by di(4-tert-butylphenyl)-DPP. Colorant blends with very good lightfastness and weatherfastness are obtained.

Example 21: The procedure of Examples 2, 4 and 5 are followed with colorant blends wherein the Pigment Red48:3 is replaced with Pigment Orange46 and the di(4-chlorophenyl)-DPP is replaced by opaque di(3-cyanophenyl)-DPP. Colorant blends with very good lightfastness and weatherfastness are obtained.

Example 22: The procedure of Examples 2, 4 and 5 are followed with colorant blends wherein the Pigment Red48:3 is replaced with Pigment Red48:4 and the di(4-chlorophenyl)-DPP is replaced by di(biphenyl-4-yl)-DPP. Colorant blends with very good lightfastness and weatherfastness are obtained.

Example 23: The procedure of Examples 2, 4 and 5 are followed with colorant blends wherein the di(4-chlorophenyl)-DPP is replaced by an opaque red solid solution consisting of 40 parts of unsubstituted DPP and 60 parts of di(4-chlorophenyl)-DPP. Colorant blends with very good lightfastness and weatherfastness are obtained.

Example 24: Example 27 is repeated except that the Pigment Red 48:3 is replaced by the following azo components: P.R.48:5 and P.R.53:1. In each instance, a colorant blend which shows very good lightfastness and weatherfastness is obtained.

Example 25: The procedure of Examples 2, 4 and 5 are followed with colorant blends wherein the P.R.48:3 is replaced with P.R.48:1 and the di(4-chlorophenyl)-DPP is replaced by an opaque red solid solution consisting of 32 parts unsubstituted DPP, 48 parts di(4-chlorophenyl)DPP and 20 parts 2,9-dichloroquinacridone. Colorant blends with very good lightfastness and weatherfastness are obtained.

Example 26: The procedure of Example 29 is repeated except that the Pigment Red48:3 is replaced by the following azo components: P.R.48:5 and P.R.53:1. In each instance, a colorant blend which shows very good lightfastness and weatherfastness is obtained.

Example 27: The procedure of Examples 2, 4 and 5 are followed with colorant blends wherein the Pigment Red48:3 is replaced with Pigment Red48:4. After 2000 hours exposure, a ΔE of 1.9, 1.1,and 0.2 is observed for the 50:50 blend, the 25:75 blend and the 10:90 blend, respectively.

Example 28: 50:50 tints are prepared by standard procedures with TiO₂ and the colorant blends used in Examples4 and5. After 2000 hours of exposure, a ΔE of 3.4 and 2.1 is observed for the 25:75 and 10:90 blends, respectively.

Example 29: A 50:50 tint with the 10:90 colorant blend of Example27 and TiO₂ is prepared by standard procedures. After 2000 hours of exposure, a ΔE of 1.5 is observed.

Example 30: A 50:50 tint with the 25:75 colorant blend of Example27 and TiO₂ is prepared by standard procedures. After 2000 hours of exposure, a ΔE of 2.8 is observed.

### Example 31:

Millbase A - 100 parts of a millbase is prepared by combining 28 parts of di(4-chlorophenyl)-DPP, 19 parts of acrylic resin, 9 parts of dispersant and 44 parts of xylene.

Millbase B - 100 parts of a millbase is prepared by combining 16 parts of Pigment Red 48:3, 27 parts of acrylic resin, 5 parts of dispersant and 52 parts of xylene.

### Masstone Paints

I. 137.3 parts of a masstone paint containing 10 parts of Pigment Red48:3 and 90 parts of di(4-chlorophenyl)-DPP is prepared by combining 36.6 parts of millbase A, 7.1 parts of millbase B, 37.4 parts of acrylic resin (68% solids), 28.1 parts of alkylated melamine-formaldehyde resin and 28.1 parts of a catalyst/stabilizer solution. Weatherometer testing yields results similar to those obtained in Example5.
II. 137.6 parts of a masstone paint containing 25 parts of Pigment Red48:3 and 75 parts of di(4-chlorophenyl)-DPP is prepared by combining 30.1 parts of millbase A, 17.5 parts of millbase B, 34.5 parts of acrylic resin, 27.7 parts of alkylated melamine-formaldehyde resin and 27.8 parts of a catalyst/stabilizer solution. Weatherometer testing yields results similar to those obtained in Example4.
III. 137.9 parts of a masstone paint containing 50 parts of Pigment Red48:3 and 50 parts of di(4-chlorophenyl)-DPP is prepared by combining 19.6 parts of millbase A, 34.3 parts of millbase B, 29.8 parts of acrylic resin, 27.1 parts of alkylated melamine-formaldehyde resin and 27.1 parts of a catalyst/stabilizer solution. Weatherometer testing yields results similar to those obtained in Example2.

### Example 32: Solvent-based mica paint formulation

### Mica Base

746 parts of a mica base is prepared by mixing 251 parts of pearlescent mica with 251 parts of acrylic resin and 244 parts of butyl acetate until lump free.

### Mica Paint Formulation

A mica basecoat paint formulation is prepared by mixing 128 parts of the pigmented millbase dispersion prepared in Example2, 70 parts of the mica base, 20.8 parts of a nonaqueous dispersion resin, 30.6 parts of melamine resin, 2.6 parts of UV screener and 3.5 parts of catalyst. The final mica basecoat paint is prepared by diluting with xylene to a spray viscosity of about 20 seconds with a #4 Ford Cup.

The mica basecoat paint is sprayed onto aluminum panels. After a flash period of about 3 minutes, an acrylic-melamine clear topcoat is applied on top of the color basecoat. The panels are then allowed to flash for 10 minutes and then baked for 30 minutes at 130°C.

The coating possesses attractive color with very good lightfastness and weatherfastness properties. Similar attractive panels are obtained using the colorant blends of Examples 3-27 in place of the pigment of Example1 in the pigmented millbase dispersion.

Example 33: A powder coating is prepared by pre-blending 8 parts of the colorant blend of Example1 with 84 parts of polyester resin, 6.4 parts of a triglycidyl isocyanurate crosslinking agent, 1 part of flow control agent and 0.5 parts of benzoin. The pre-blended mixture is then fed into a twin screw extruder. The extrudate is cooled, ground and sieved through a 120mesh screen to yield the powder coating.

The powder coating is sprayed onto aluminum panels by standard methods and then cured at 200°C for 15 minutes. The coating possesses attractive color with very good lightfastness and weatherfastness properties. Similar attractive panels are obtained using the colorant blends of Examples 3-27 in place of the pigment of Example1.

Example 34: A pigmented, flexible polyvinyl chloride sheet is prepared by standard techniques from a mixture containing 1 part of the colorant blend of Example1, 100 parts of PVC resin, 100 parts of plasticizer, 18 parts of calcium carbonate and 3 parts of stabilizer. The resulting flexible PVC sheet shows very little specking or streaking. Similar PVC sheets are obtained when the colorant blends of Examples 3-27 replace the colorant blend of Example1.

## Claims

1. A colorant blend, which contains (a) an azo component, which azo component is a salt of a salt-forming azo pigment of the formula
A - N = N - B ,
wherein A is the residue of a diazo component and B is the residue of a coupling component; and (b) a second component, which second component is an opaque 1,4-diketo-3,6-diarylpyrrolo[3,4-c]pyrrole (DPP) pigment having a hue on the CIE Lch scale within ±5 units of the azo component.

2. A colorant blend of claim 1 wherein the diazo component is a diazotizable amine containing an acidic substituent, such as a sulfonic or carboxylic acid substituent, or a salt form thereof, in particular an alkali metal salt, such as a sodium or potassium salt.

3. A colorant blend of claim 2 wherein the diazo component is an amino-substituted benzene, toluene or naphthalene which is further substituted by a water-solubilizing group, a sulfonic acid group, a carboxylic acid group, or a salt form thereof.

4. A colorant blend of claim 3 wherein the coupling component is a 2-hydroxynaphthalene compound of the formula 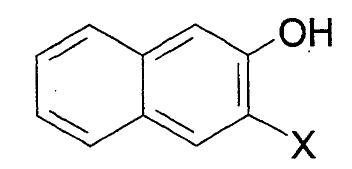 wherein X is H, -COOH, -SO₃H, an amide residue of the formula 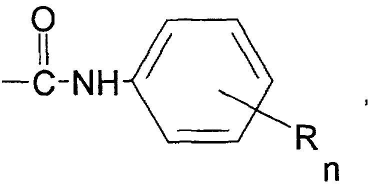 or a sulfonamide residue of the formula 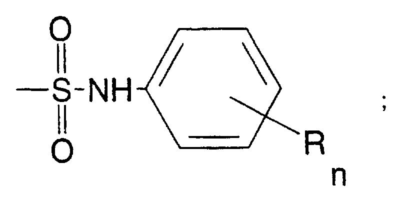 wherein R is alkyl, for example methyl or ethyl; alkoxy, for example methoxy or ethoxy; halogen, especially chlorine; nitro; or a 5- or 6- membered heterocycle condensed to the phenyl ring; and wherein n is 0 to 3.

5. A colorant blend of claim 1 wherein the diazo and coupling components are unsubstituted or substituted by one or more customary substituents; which substituents may be further substituted, especially in the alkyl, alkoxy or aryl groups, by additional customary substituents.

6. A colorant blend of claim 1 wherein the diazo component is 2-amino-4-chloro-5-methylbenzenesulfonic acid, 2-aminonaphthalene-1-sulfonic acid, 2-amino-4-methyl-5-chloro-benzenesulfonic acid, 2-amino-5-methylbenzenesulfonic acid, 2-amino-4-methylbenzenesulfonic acid, 2-methyl-4-aminobenzenesulfonic acid, 2-chloro-5-aminobenzenesulfonic acid, 4-aminobenzenesulfonic acid or 2-amino-4-ethyl-5-chloro-benzenesulfonic acid.

7. A colorant blend of claim 1 wherein the coupling component is 2-naphthol, 3-hydroxy-2-naphthoic acid, a 2-hydroxy-3-naphthanilide, including 2-hydroxy-3-naphth-2'-methylanilide, 2-hydroxy-3-naphth-2'-methoxyanilide, 2-hydroxy-3-naphth-2'-ethoxyanilide, 2-hydroxy-3-naphth-3'-nitroanilide, 2-hydroxy-3-naphth-4'-chloroanilide, 2-hydroxy-3-naphth-4'-methoxyanilide, 2-hydroxy-3-naphth-4'-ethoxyanilide, 2-hydroxy-3-naphth-2',4'-dimethylanilide, 2-hydroxy-3-naphth-2'-methyl-5'-chloroanilide, 2-hydroxy-3-naphth-2'-methoxy-5'-chloroanilide, 2-hydroxy-3-naphth-2',5'-dimethoxyanilide, 2-hydroxy-3-naphth--2',4'-dimethoxy-5'-chloroanilide, 2-hydroxy-3-naphth-2',5'-dimethoxy-4'-chloroanilide, and the corresponding 2-hydroxy-3-naphthsulfonanilides.

8. A colorant blend of claim 7 wherein the diazo component is 2-amino-4-chloro-5-methylbenzenesulfonic acid, 2-aminonaphthalene-1-sulfonic acid, 2-amino-4-methyl-5-chlorobenzenesulfonic acid, 2-amino-5-methylbenzenesulfonic acid, 2-amino-4-methylbenzenesulfonic acid, 2-methyl-4-aminobenzenesulfonic acid, 2-chloro-5-aminobenzenesulfonic acid, 4-aminobenzenesulfonic acid or 2-amino-4-ethyl-5-chlorobenzenesulfonic acid.

9. A colorant blend of claim 1 wherein the azo component is an alkali metal, alkaline earth metal, a transition metal, calcium, barium, or strontium salt.

10. A colorant blend of claim 1 wherein the azo component is selected from among the C.I. Pigment Reds and C.I. Pigment Oranges, including P.R.48, P.R.48:1, P.R.48:2, P.R.48:3, P.R.48:4, P.R.48:5, P.R.49, P.R.49:1, P.R.49:2, P.R.49:3, P.R.50:1, P.R.51, P.R.52:1, P.R.52:2, P.R.53, P.R.53:1, P.R.53:3, P.R.57:1, P.R.58:2, P.R.58:4, P.R.60:1, P.R.63:1. P.R.63:2, P.R.64, P.R.64:1, P.R.66, P.R.67, P.R.68, P.R.151, P.R.200, P.R.237, P.R.239, P.R.240, P.R.243, P.R.247, P.R.247:1; P.O.17, P.O.17:1, P.O.19 and P.O.46.

11. A colorant blend of claim 1 wherein the second component is a DPP pigment or a solid solution containing a DPP pigment.

12. A colorant blend which contains Pigment Red 52:2 and di(4-chlorophenyl)-DPP.

13. A colorant blend of claim 11 wherein the DPP component is compound selected from the group consisting of diphenyl-DPP, di(4-chlorophenyl)-DPP, di(4-tertbutylphenyl)-DPP, di(3-cyanophenyl)-DPP, di(4-cyanophenyl)-DPP, di(biphenyl-4-yl)-DPP and di(4-methylphenyl)-DPP, di(3,4-dichlorophenyl)-DPP; including solid solutions containing the above-identified compounds.

14. A colorant blend of claim 1 wherein the weight ratio of the azo component to the second component is from 5:95 to 60:40, in particular from 10:90 to 50:50, more specifically from 10:90 to 25:75.

15. A colorant blend of claim 1 wherein the hue of the second component is within ±3 units of the hue of the azo component.

16. A method of selecting pigments to be blended in a colorant blend consisting of an azo component and a second component, which comprises selecting a second component having a hue within 5units of the hue of the azo component.

17. A method of preparing a colorant blend according to claim 1, which comprises blending an azo component and a second component, wherein the second component has a hue within ±5units, preferably within within ±3units, most preferably within ±2 units, of the hue of the azo component.

18. A method of preparing a colorant blend of claim 1, wherein the azo component and the second component are blended together by known dry or wet blending techniques and then dispersed, or, the azo component and the second component are dispersed separately and then the dispersions are blended together into a single dispersion.

19. A method of coloring a high-molecular-weight organic material with a colorant blend, which comprises incorporating a colorant blend of claim 1 into the high-molecular-weight organic material.

20. A method of claim 18, wherein the high-molecular-weight organic material is an automotive paint.

21. A colorant blend of claim 1 wherein the azo component/second component ratio is from 10:90 to 50:50 with the following combinations of azo component/second component: P.R.53:1/unsubstituted DPP; P.R.53:3/unsubstituted DPP; P.R.53:1/di(4-chlorophenyl)-DPP; P.R.48:5/di(4-chlorophenyl)-DPP; P.R.48:1/unsubstituted DPP; P.R.48:4/di(biphenyl-4-yl)-DPP; P.R.48:2/di(biphenyl-4-yl)-DPP; P.R.48:3/unsubstituted DPP; P.R.48:5/unsubstituted DPP; P.R.49:1/di(4-chlorophenyl)-DPP; P.R.49:1/di(biphenyl-4-yl)-DPP; P.R.49:2/di(biphenyl-4-yl)-DPP; P.R.49:2/di(4-chlorophenyl)-DPP; P.R.57:1/di(biphenyl-4-yl)-DPP.

22. A colorant blend of claim 1 wherein the coupling component is a pyrazolone derivative having an activated methylene group, especially 1-phenyl-3-methyl-5-pyrazolone, 1-phenyl-3-carbethoxy-5-pyrazolone or one of their derivatives.

23. A colorant blend of claim 1 wherein the azo component is a monoazo or disazo pigment.

## Patentansprüche

1. Farbstoffgemisch, enthaltend (a) eine Azokomponente, bei der es sich um ein Salz eines salzbildenden Azopigments der folgenden Formel handelt
A - N = N - B
worin A den Rest einer Diazokomponente und B den Rest einer Kupplungskomponente bedeutet; und
(b) eine zweite Komponente, bei der es sich um ein undurchsichtiges 1,4-Diketo-3,6-diarylpyrrolo[3,4-c]pyrrol-Pigment (DPP-Pigment) mit einem Farbton auf der CIE-Lch-Skala innerhalb von ± 5 Einheiten der Azokomponente handelt.

2. Farbstoffgemisch nach Anspruch 1, wobei es sich bei der Diazokomponente um ein diazotierbares Amin mit einem sauren Substituenten, z.B. einem Sulfon- oder Carbonsäuresubstituenten oder einem Salz davon, insbesondere einem Alkalimetallsalz, z.B. einem Natrium- oder Kaliumsalz, handelt.

3. Farbstoffgemisch nach Anspruch 2, wobei es sich bei der Diazokomponente um ein aminosubstituiertes Benzol, Tuluol oder Naphthalin handelt, das zusätzlich durch eine die Löslichkeit in Wasser vermittelnde Gruppe, eine Sulfonsäuregruppe, eine Carbonsäuregruppe oder ein Salz davon substituiert ist.

4. Farbstoffgemisch nach Anspruch 3, wobei es sich bei der Kupplungskomponente um eine 2-Hydroxynaphthalinverbindung der folgenden Formel handelt 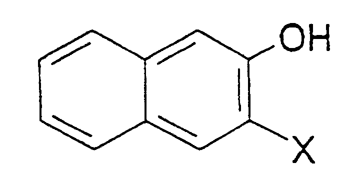 worin X H, -COOH, -SO₃H, einen Amidrest der Formel 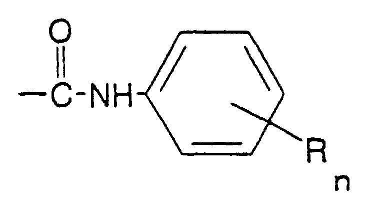 oder einen Sulfonamidrest der Formel 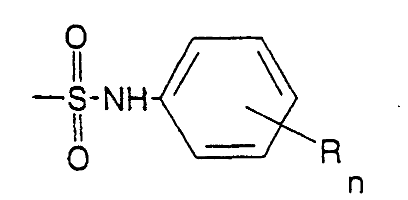 bedeutet, wobei R Alkyl, z.B. Methyl oder Ethyl; Alkoxy, z.B. Methoxy oder Ethoxy; Halogen, insbesondere Chlor; Nitro; oder einen 5-oder 6-gliedrigen Heterocyklus, der an den Phenylring kondensiert ist, bedeutet; und wobei n einen Wert von 0 bis 3 hat.

5. Farbstoffgemisch nach Anspruch 1, wobei die Diazokomponente und die Kupplungskomponente unsubstituiert oder durch einen oder mehrere übliche Substituenten substituiert sind, wobei die Substituenten zusätzlich insbesondere in den Alkyl-, Alkoxy- oder Arylgruppen durch weitere übliche Substituenten substituiert sein können.

6. Farbstoffgemisch nach Anspruch 1, wobei es sich bei der Diazokomponente um 2-Amino-4-chlor-5-methylbenzolsulfonsäure, 2-Aminonaphthalin-1-sulfonsäure, 2-Amino-4-methyl-5-chlorbenzolsulfonsäure, 2-Amino-5-methylbenzolsulfonsäure, 2-Amino-4-methylbenzolsulfonsäure, 2-Methyl-4-aminobenzolsulfonsäure, 2-Chlor-5-aminobenzolsulfonsäure, 4-Aminobenzolsulfonsäure und 2-Amino-4-ethyl-5-chlorbenzolsulfonsäure handelt.

7. Farbstoffgemisch nach Anspruch 1, wobei es sich bei der Kupplungskomponente um 2-Naphthol, 3-Hydroxy-2-naphthoesäure, 2-Hydroxy-3-naphthanilid, einschließlich 2-Hydroxy-3-naphth-2'-methylanilid, 2-Hydroxy-3-naphth-2'-methoxyanilid, 2-Hydroxy-3-naphth-2'-ethoxyanilid, 2-Hydroxy-3-naphth-3'-nitroanilid, 2-Hydroxy-3-naphth-4'-chloranilid, 2-Hydroxy-3-naphth-4'-methoxyanilid, 2-Hydroxy-3-naphth-4'-ethoxyanilid, 2-Hydroxy-3-naphth-2',4'-dimethylanilid, 2-Hydroxy-3-naphth-2'-methyl-5'-chloranilid, 2-Hydroxy-3-naphth-2'-methoxy-5'-chloranilid, 2-Hydroxy-3-naphth-2',5'-dimethoxyanilid, 2-Hydroxy-3-naphth-2',4'-dimethoxy-5'-chloranilid, 2-Hydroxy-3-naphth-2',5,-dimethoxy-4'-chloranilid und die entsprechenden 2-Hydroxy-3-naphthsulfonanilide handelt.

8. Farbstoffgemisch nach Anspruch 7, wobei es sich bei der Diazokomponente um 2-Amino-4-chlor-5-methylbenzolsulfonsäure, 2-Aminonaphthalin-1-Sulfonsäure, 2-Amino-4-methyl-5-chlorbenzolsulfonsäure, 2-Amino-5-methylbenzolsulfonsäure, 2-Amino-4-methylbenzolsulfonsäure, 2-Methyl-4-aminobenzolsulfonsäure, 2-Chlor-5-aminobenzolsulfonsäure, 4-Aminobenzolsulfonsäure und 2-Amino-4-ethyl-5-chlorbenzolsulfonsäure handelt.

9. Farbstoffgemisch nach Anspruch 1, wobei es sich bei der Azokomponente um ein Alkalimetall-, Erdalkalimetall-, Übergangsmetall-, Calcium-, Barium- oder Strontiumsalz handelt.

10. Farbstoffgemisch nach Anspruch 1, wobei die Azokomponente ausgewählt ist unter C.I.-Pigmentrot-Farbstoffen und C.I.-Pigmentorange-Farbstoffen, einschließlich P.R.48, P.R.48:1, P.R.48:2, P.R.48:3, P.R.48:4, P.R.48:5, P.R.49, P.R.49:1, P.R.49:2, P.R.49:3, P.R.50:1, P.R.51, P.R.52:1, P.R.52:2, P.R.53, P.R.53:1, P.R.53:3, P.R.57:1, P.R.58:2, P.R.58:4, P.R.60:1, P.R.63:1. P.R.63:2, P.R.64, P.R.64:1, P.R.66, P.R.67, P.R.68, P.R.151, P.R.200, P.R.237, P.R.239, P.R.240, P.R.243, P.R.247, P.R.247:1; P.O.17, P.O.17:1, P.O.19 und P.O.46.

11. Farbstoffgemisch nach Anspruch 1, wobei es sich bei der zweiten Komponente um ein DPP-Pigment oder um eine feste Lösung mit einem Gehalt an einem DPP-Pigment handelt.

12. Farbstoffgemisch enthaltend Pigmentrot 52:2 und Di-(4-chlorphenyl)-DPP.

13. Farbstoffgemisch nach Anspruch 11, wobei die DPP-Komponente ausgewählt ist aus der Gruppe: Diphenyl-DPP, Di-(4-chlorphenyl)-DPP, Di-(4-tert.-butylphenyl)-DPP, Di-(3-cyanophenyl)-DPP, Di-(4-cyanophenyl)-DPP, Di-(biphenyl-4-yl)-DPP, und Di-(4-methylphenyl)-DPP sowie Di-(3,4-dichlorphenyl)-DPP; einschließlich feste Lösungen mit einem Gehalt an den vorerwähnten Verbindungen.

14. Farbstoffgemisch nach Anspruch 1, wobei das Gewichtsverhältnis der Azokomponente zur zweiten Komponente 5:95 bis 60:40, insbesondere 10:90 bis 50:50 und ganz besonders 10:90 bis 25:75 beträgt.

15. Farbstoffgemisch nach Anspruch 1, wobei der Farbton der zweiten Komponente innerhalb von ± 3 Einheiten des Farbtons der Azokomponente liegt.

16. Verfahren zum Auswählen von Pigmenten, die in einem Farbstoffgemisch, das aus einer Azokomponente und einer zweiten Komponente besteht, zu vermischen sind, wobei das Verfahren das Auswählen einer zweiten Komponente mit einem Farbton innerhalb von 5 Einheiten des Farbtons der Azokomponente umfasst.

17. Verfahren zur Herstellung eines Farbstoffgemisches nach Anspruch 1, umfassend das Vermischen einer Azokomponente und einer zweiten Komponente, wobei die zweite Komponente einen Farbton innerhalb von ± 5 Einheiten, vorzugsweise innerhalb ± 3 Einheiten und ganz besonders innerhalb von ± 2 Einheiten des Farbtons der Azokomponente aufweist.

18. Verfahren zur Herstellung eines Farbstoffgemisches nach Anspruch 1, wobei die Azokomponente und die zweite Komponente nach bekannten Trocken- oder Nassmischtechniken vermischt und anschließend dispergiert werden oder wobei die Azokomponente und die zweite Komponente getrennt dispergiert werden und anschließend die Dispersionen zu einer einzigen Dispersion vermischt werden.

19. Verfahren zum Färben eines hochmolekularen, organischen Materials mit einem Farbstoffgemisch, umfassend das Einverleiben eines Farbstoffgemisches nach Anspruch 1 in das hochmolekulare, organische Material.

20. Verfahren nach Anspruch 18, wobei es sich beim hochmolekularen, organischen Material um ein Kraftfahrzeuganstrichmittel handelt.

21. Farbstoffgemisch nach Anspruch 1, wobei das Verhältnis der Azokomponente zur zweiten Komponente 10:90 bis 50:50 beträgt und die folgenden Kombinationen von Azokomponente und zweiter Komponente vorliegen: P.R.53:1/unsubstituiertes DPP; P.R.53:3/unsubstituiertes DPP; P.R.53:1/Di-(4-chlorphenyl)-DPP; P.R.48:5/Di-(4-chlorphenyl)-DPP; P.R.48:1/unsubstituiertes DPP; P.R.48:4/Di-(biphenyl-4-yl)-DPP; P.R.48:2/Di-(biphenyl-4-yl)-DPP; P.R.48:3/unsubstituiertes DPP; P.R.48:5/unsubstituiertes DPP; P.R.49:1/Di-(4-chlorphenyl)-DPP; P.R.49:1/Di-(biphenyl-4-yl)-DPP; P.R.49:2/Di-(biphenyl-4-yl)-DPP; P.R.49:2/Di-(4-chlorphenyl)-DPP; P.R.57:1/Di-(biphenyl-4-yl)-DPP.

22. Farbstoffgemisch nach Anspruch 1, wobei es sich bei der Kupplungskomponente um ein Pyrazolonderivat mit einer aktivierten Methylengruppe handelt, insbesondere um 1-Phenyl-3-methyl-5-pyrazolon, 1-Phenyl-3-carbethoxy-5-pyrazolon oder ein Derivat davon.

23. Farbstoffgemisch nach Anspruch 1, wobei es sich bei der Azokomponente um ein Monoazo- oder Diazopigment handelt.

## Revendications

1. Mélange de colorants, qui contient (a) un composant azoïque, composant azoïque qui est un sel d'un pigment azoïque formant un sel de formule:
A - N = N - B,
dans laquelle A est le résidu d'un composant diazoïque et B est le résidu d'un composant de copulation; et (b) un deuxième composant, deuxième composant qui est un pigment 1,4-dicéto-3,6-diarylpyrrolo[3,4-c]pyrrole (DPP) opaque, ayant une nuance sur l'échelle CIE Lch dans les limites de ±5 unités du composant azoïque.

2. Mélange de colorants selon la revendication 1, dans lequel le composant diazoïque est une amine diazotable contenant un substituant acide, tel qu'un substituant acide sulfonique ou carboxylique, ou une de ses formes sel, en particulier un sel de métal alcalin, tel qu'un sel de sodium ou de potassium.

3. Mélange de colorants selon la revendication 2, dans lequel le composant diazoïque est un benzène substitué par une amine, un toluène ou un naphtalène qui est de plus substitué par un groupe hydrosolubilisant, un groupe acide sulfonique, un groupe acide carboxylique ou une de ses formes sel.

4. Mélange de colorants selon la revendication 3, dans lequel le composant de copulation est un composé 2-hydroxynaphtalène de formule: 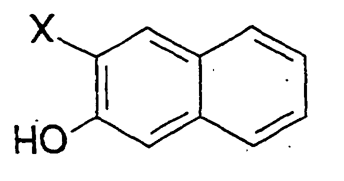 dans laquelle X est H, -COOH, -SO₃H, un résidu amide de formule: 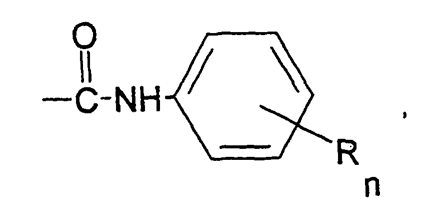 ou un résidu sulfonamide de formule 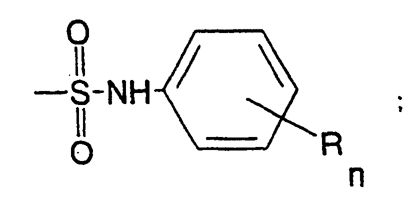 dans laquelle R est un groupe alkyle, par exemple, un groupe méthyle ou éthyle; alcoxy, par exemple, méthoxy ou éthoxy; un atome d'halogène, en particulier, le chlore; un groupe nitro; ou un hétérocycle de 5 ou 6 éléments condensé au noyau phénylique; et dans laquelle n vaut 0 à 3.

5. Mélange de colorants selon la revendication 1, dans lequel les composants diazoïque et de copulation sont non substitués ou substitués par un ou plusieurs substituants courants; substituants qui peuvent être de plus substitués, en particulier dans les groupes alkyle, alcoxy ou aryle, par des substituants courants supplémentaires.

6. Mélange de colorants selon la revendication 1, dans lequel le composant diazoïque est l'acide 2-amino-4-chloro-5-méthylbenzènesulfonique, l'acide 2-aminonaphtalène-1-sulfonique, l'acide 2-amino-4-méthyl-5-chlorobenzènesulfonique, l'acide 2-amino-5-méthylbenzènesulfonique, l'acide 2-amino-4-méthylbenzènesulfonique, l'acide 2-méthyl-4-aminobenzènesulfonique, l'acide 2-chloro-5-aminobenzènesulfonique, l'acide 4-aminobenzènesulfonique ou l'acide 2-amino-4-éthyl-5-chlorobenzènesulfonique.

7. Mélange de colorants selon la revendication 1, dans lequel le composant de copulation est le 2-naphtol, l'acide 3-hydroxy-2-naphtoïque, un 2-hydroxy-3-naphtanilide, incluant le 2-hydroxy-3-napht-2'-méthylanilide, le 2-hydroxy-3-napht-2'-méthoxyanilide, le 2-hydroxy-3-napht-2'-éthoxyanilide, le 2-hydroxy-3-napht-3'-nitroanilide, le 2-hydroxy-3-napht-4'-chloroanilide, le 2-hydroxy-3-napht-4'-méthoxyanilide, le 2-hydroxy-3-napht-4'-éthoxyanilide, le 2-hydroxy-3-napht-2',4'-diméthylanilide, le 2-hydroxy-3-napht-2'-méthyl-5'-chloroanilide, le 2-hydroxy-3-napht-2'-méthoxy-5'-chloroanilide, le 2-hydroxy-3-napht-2',5'-diméthoxyanilide, le 2-hydroxy-3-napht-2',4'-diméthoxy-5'-chloroanilide, le 2-hydroxy-3-napht-2',5'-diméthoxy-4'-chloroanilide, et les 2-hydroxy-3-naphtsulfonamides correspondants.

8. Mélange de colorants selon la revendication 7, dans lequel le composant diazoïque est l'acide 2-amino-4-chloro-5-méthylbenzènesulfonique, l'acide 2-aminonaphtalène-1-sulfonique, l'acide 2-amino-4-méthyl-5-chlorobenzènesulfonique, l'acide 2-amino-5-méthylbenzènesulfonique, l'acide 2-amino-4-méthylbenzènesulfonique, l'acide 2-méthyl-4-aminobenzènesulfonique, l'acide 2-chloro-5-aminobenzènesulfonique, l'acide 4-aminobenzènesulfonique ou l'acide 2-amino-4-éthyl-5-chlorobenzènesulfonique.

9. Mélange de colorants selon la revendication 1, dans lequel le composant azoïque est un sel de métal alcalin, de métal alcalino-terreux, de métal de transition, de calcium, de baryum ou de strontium.

10. Mélange de colorants selon la revendication 1, dans lequel le composant azoïque est choisi parmi les C.I. Pigment Reds et les C.I. Pigment Oranges, comprenant P.R.48, P.R.48:1, P.R.48:2, P.R.48:3, P.R.48:4, P.R.48:5, P.R.49, P.R.49:1, P.R.49:2, P.R.49:3, P.R.50:1, P.R.51, P.R.52:1, P.R.52:2, P.R.53, P.R.53:1, P.R.53:3, P.R.57:1, P.R.58:2, P.R.58:4, P.R.60:1, P.R.63:1, P.R.63:2, P.R.64, P.R.64:1, P.R.66, P.R.67, P.R.68, P.R.151, P.R.200, P.R.237, P.R.239, P.R.240, P.R.243, P.R.247, P.R.247:1, P.O.17, P.O.17:1, P.O.19 et P.O.46.

11. Mélange de colorants selon la revendication 1, dans lequel le deuxième composant est un pigment DPP ou une solution solide contenant un pigment DPP.

12. Mélange de colorants qui contient un Pigment Red 52:2 et le di(4-chlorophényl)-DPP.

13. Mélange de colorants selon la revendication 11, dans lequel le composant DPP est un composé choisi dans le groupe formé par le diphényl-DPP, le di(4-chlorophényl)-DPP, le di (4-tertbutylphényl)-DPP, le di(3-cyanophényl)-DPP, le di(4-cyanophényl)-DPP, le di(biphényl-4-yl)-DPP et le di(4-méthylphényl)-DPP, le di(3,4-dichlorophényl)-DPP; incluant les solutions solides contenant les composés identifiés ci-dessus.

14. Mélange de colorants selon la revendication 1, dans lequel le rapport pondéral du composant azoïque au deuxième composant va de 5:95 à 60:40, en particulier de 10:90 à 50:50, plus particulièrement de 10:90 à 25:75.

15. Mélange de colorants selon la revendication 1, dans lequel la nuance du deuxième composant est dans les limites de ±3 unités de la nuance du composant azoïque.

16. Procédé pour choisir des pigments à mélanger dans un mélange de colorants composé d'un composant azoïque et d'un deuxième composant, qui consiste à choisir un deuxième composant ayant une nuance dans les limites de ±5 unités de la nuance du composant azoïque.

17. Procédé pour préparer un mélange de colorants selon la revendication 1, qui consiste à mélanger un composant azoïque et un deuxième composant, tandis que le deuxième composant possède une nuance dans les limites de ±5 unités, de préférence dans les limites de ±3 unités, de façon tout particulièrement préférée dans les limites de ±2 unités de la nuance du composant azoïque.

18. Procédé pour préparer un mélange de colorants selon la revendication 1, dans lequel le composant azoïque et le deuxième composant sont mélangés ensemble par des techniques de mélange sec ou mouillé connues, puis sont dispersés, ou bien le composant azoïque et le deuxième composant sont dispersés séparément, puis les dispersions sont mélangées ensemble dans une dispersion unique.

19. Procédé pour colorer une matière organique à masse moléculaire élevée avec un mélange de colorants, qui consiste à incorporer un mélange de colorants selon la revendication 1 dans la matière organique à masse moléculaire élevée.

20. Procédé selon la revendication 18, dans lequel la matière organique à masse moléculaire élevée est une peinture pour automobile.

21. Mélange de colorants selon la revendication 1, dans lequel le rapport composant azoïque/deuxième composant est compris entre 10:90 et 50:50, avec les combinaisons suivantes du composant azoïque/deuxième composant: P.R.53:1/DPP non substitué; P.R.53:3 DPP non substitué; P.R.53:1/di(4-chlorophényl)-DPP; P.R.48:5/di(4-chlorophényl)-DPP; P.R.46:1/DPP non substitué; P.R.48:4/di(biphényl-4-yl)-DPP; P.R.48:2/di(biphényl-4-yl)-DPP; P.R.48:3/DPP non substitué; P.R.48:5/DPP non substitué; P.R.49:1/di(4-chloro-phényl)-DPP; P.R.49:1/di(biphényl-4-yl)-DPP; P.R.49:2/di(biphényl-4-yl)-DPP; P.R.49:2/di(4-chlorophényl)-DPP; P.R.57:1/di(biphényl-4-yl)-DPP.

22. Mélange de colorants selon la revendication 1, dans lequel le composant de copulation est un dérivé pyrazolone ayant un groupe méthylène activé, en particulier, la 1-phényl-3-méthyl-5-pyrazolone, la 1-phényl-3-carbéthoxy-5-pyrazolone ou un de leurs dérivés.

23. Mélange de colorants selon la revendication 1, dans lequel le composant azoïque est un pigment monoazoïque ou diazoïque.
